# EUROPEAN PATENT APPLICATION

(11) **EP 4 851 696 A1**
(43) Date of publication of application: **09.12.2026**
(21) Application number: 26181233.3
(22) Date of filing: 27.05.2026
(51) Int. Cl.: G02B 26/12

(54) **OPTICAL SCANNING DEVICE, AND IMAGE FORMING APPARATUS**

(30) Priority: 05.06.2025 JP 2025094087
(71) Applicant: Kyocera Document Solutions Inc., Osaka-shi, Osaka 540-8585 (JP)
(72) Inventor: MURASE, Takaaki, Osaka, 540-8585 (JP)
(74) Representative: BRP Renaud & Partner mbB Rechtsanwälte Patentanwälte Steuerberater

(57) **Abstract**

The optical scanning device (5) includes a polygon mirror (45), a light source part (46), a scanning lens (41, 42), and a housing part (48). The light source part (46) has a plurality of light-emitting modules (30Y to 30K). Each light-emitting module (30Y to 30K) includes a light-emitting element (35), a coupling lens (32), and a cylindrical-shaped bracket (33a, 33b). The housing part (48) has a bottom portion (48a) and a plurality of stationary wall portions (90 to 92). Each light-emitting module (30Y to 30K) is placed between neighboring ones (93Y, 93M, 93K, 93C) of the stationary wall portions (90, 91, 92), and is bonded and fixed to the stationary wall portions (90 to 92) with adhesive (95) applied to between widthwise both end portions (36a, 38a) of the bracket (33a, 33b) and the stationary wall portions (90 to 92). The adhesive (95) is housed in an adhesive housing recessed portion (94a to 94h) which is provided at at least one of the both end portions (36a, 38a) and the stationary wall portions (90c, 90d, 91c, 91d, 91e, 91f, 92c, 92d) and which is recessed downward in the widthwise direction.

## Description

### BACKGROUND

The present disclosure relates to an optical scanning device, and an image forming apparatus.

Among conventional optical scanning devices to be mounted on an image forming apparatus is one as follows. The optical scanning device includes a light source part, a polygon mirror, a scanning lens, and a housing part (light box). The light source part includes a plurality of light-emitting modules (optical units). Each light-emitting module emits laser light. The polygon mirror rotates about a rotational axis extending in an up/down direction to reflect the laser light emitted from the light source part, allowing a circumferential surface of an image carrier to be scanned in a main scanning direction. The scanning lens uses the laser light, which has been reflected by the polygon mirror, for image formation on the circumferential surface of the image carrier. The housing part houses the light source part, the polygon mirror, and the scanning lens.

Each light-emitting module includes a light-emitting element, a lens, and a bracket. The light-emitting element emits laser light. The lens converts the laser light, which has been emitted from the light-emitting element, into light generally parallel to the main scanning direction. The bracket is formed into a cylindrical shape, extending in an emission direction of the laser light to hold the lens inside. Each light-emitting module is unitized with an aid of a fixing member. The light-emitting module is fixed to the housing part via the fixing member. The fixing member is a spring or other elastic member.

### SUMMARY

An objective of the present disclosure is to provide an optical scanning device, as well as an image forming apparatus equipped with the optical scanning device, capable of suppressing performance degradation of the image forming apparatus while suppressing any increases in cost.

An optical scanning device according to one aspect of the disclosure includes a polygon mirror, a light source part, a scanning lens, and a housing part. The light source part has a plurality of light-emitting modules each for emitting a laser beam. The polygon mirror rotates about a rotational axis extending in an up/down direction to reflect the laser beam emitted from the light source part so that a circumferential surface of an image carrier is scanned in a main scanning direction. The scanning lens forms an image from the laser beam, which has been reflected by the polygon mirror, on the circumferential surface of the image carrier. The housing part houses the light source part, the polygon mirror, and the scanning lens. Each of the plurality of light-emitting modules includes: a light-emitting element for emitting the laser beam; a coupling lens for converting the laser beam emitted from the light-emitting element into a laser beam generally parallel to the main scanning direction and also for condensing the laser beam to a sub scanning direction; and a bracket which extends in an emission direction of the laser beam to hold the light-emitting element and the coupling lens, and which is cylindrical-shaped. The housing part has a bottom portion which extends in a direction perpendicular to the rotational axis, and a plurality of stationary wall portions which protrude upward from the bottom portion and which are arrayed in a widthwise direction perpendicular to the emission direction. Each of the light-emitting modules is placed between neighboring ones of the stationary wall portions, and is bonded and fixed to the stationary wall portions with adhesive applied to between widthwise both end portions of the bracket and the stationary wall portions. The adhesive is housed in an adhesive housing recessed portion which is provided at at least one of the both end portions and the stationary wall portions and which is recessed downward in the widthwise direction.

An image forming apparatus according to one aspect of the disclosure includes: one or more image carriers each having a photoconductor layer formed on its surface; a charger unit for electrically charging the image carrier to a specified surface potential; and the optical scanning device of the above-described configuration by which the surface of the image carrier, which has been electrically charged by the charger unit, is exposed to light to form an electrostatic latent image with its charged level attenuated.

### BRIEF DESCRIPTION OF THE DRAWINGS

FIG. 1 is a schematic cross-sectional view showing an overall configuration of an image forming apparatus on which an optical scanning device 5 of the present disclosure is to be mounted;
FIG. 2 is a perspective view of the optical scanning device;
FIG. 3 is a cross-sectional view showing a cross section obtained by cutting the optical scanning device by A-A sectional line shown in FIG. 2;
FIG. 4 is a perspective view showing a light source part in enlargement;
FIG. 5 is a perspective view of a light-emitting module;
FIG. 6 is a cross-sectional view obtained by cutting the light-emitting module along an optical axis;
FIG. 7 is a perspective view of a light-emitting module;
FIG. 8 is a cross-sectional view obtained by cutting the light-emitting module along an optical axis;
FIG. 9 is a plan view of a light source part as viewed from the downstream side of an emission direction of laser light;
FIG. 10 is a plan view of the light source part as viewed from above; and
FIG. 11 is a cross-sectional view showing a cross section cut by B-B sectional line shown in FIG. 10.

### DETAILED DESCRIPTION

### <1. Configuration of image forming apparatus 100>

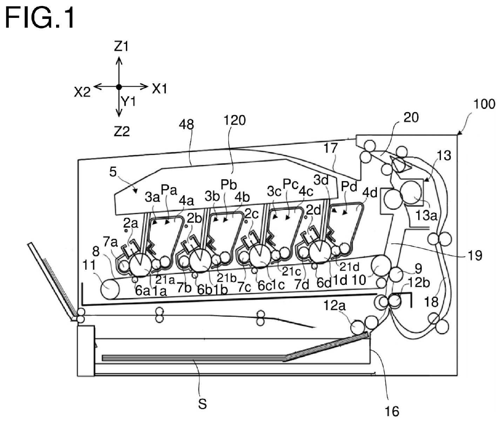

Hereinbelow, an embodiment of the present disclosure will be described with reference to the accompanying drawings. FIG. 1 is a schematic cross-sectional view showing an overall configuration of an image forming apparatus 100 on which an optical scanning device 5 of the disclosure is to be mounted. For explanation's sake, a vertical direction in an installation state (a state shown in FIG. 1) in which the image forming apparatus 100 is available is defined as an up/down direction (Z1-Z2 direction). Also, a front/rear direction (Y1-Y2 direction) is defined such that a viewer-side face of the image forming apparatus 100 shown in FIG. 1 is its front face, as viewed in the drawing sheet. Further, a left/right direction (X1-X2 direction) is defined on a basis of the front surface of the image forming apparatus 100 in its installed state. In this embodiment, the left/right direction (X1-X2 direction) is perpendicular to both the up/down direction (Z1-Z2 direction) and the front/rear direction (Y1-Y2 direction).

The image forming apparatus 100 is a tandem-type color printer. The image forming apparatus 100 is equipped with photoconductor drums 1a to 1d which are rotatable as image carriers. The photoconductor drums 1a to 1d are provided each by using an organic photoconductor (OPC) with an organic photoconductor layer formed thereon, or an amorphous silicon photoconductor with an amorphous silicon photoconductor layer formed thereon, or the like. The photoconductor drums 1a to 1d are tandem placed in correspondence to individual colors of yellow, cyan, magenta and black, respectively.

Laid out around the photoconductor drum 1a are a developing unit 3a, a charger 2a, and a cleaning unit 7a. Similarly, laid out around the photoconductor drums 1b to 1d are developing units 3b to 3d, chargers 2b to 2d, and cleaning units 7b to 7d, respectively. Also, the optical scanning device 5 is provided on the upper side Z1 of the developing units 3a to 3d.

The developing units 3a to 3d are placed on a left side X2 of the photoconductor drums 1a to 1d, respectively. The developing units 3a to 3d face the photoconductor drums 1a to 1d, respectively. The developing units 3a to 3d feed toner to the photoconductor drums 1a to 1d, respectively. The developing units 3a to 3d include containers 4a to 4d, respectively. The containers 4a to 4d contain toner of the individual colors of magenta, cyan, yellow and black, respectively.

The chargers 2a to 2d are placed upstream of the developing units 3a to 3d as viewed in rotational directions of the photoconductor drums 1a to 1d, respectively. The chargers 2a to 2d face surfaces of the photoconductor drums 1a to 1d, respectively. The chargers 2a to 2d uniformly electrically charge the surfaces of the photoconductor drums 1a to 1d, respectively.

In this embodiment, the optical scanning device 5 is placed on the upper side Z1 of the photoconductor drums 1a to 1d. Based on image data such as texts and patterns inputted from a personal computer or the like to an image input part, the optical scanning device 5 emits laser beams D1 to D4 onto (optically scans) the surfaces of the photoconductor drums 1a to 1d. As described above, the surfaces of the photoconductor drums 1a to 1d are uniformly charged by the chargers 2a to 2d, respectively. Therefore, by the emission of the laser beams D1 to D4, arbitrary electrostatic latent images are formed on the surfaces of the photoconductor drums 1a to 1d, respectively.

In this state, toner is fed from the developing units 3a to 3d to the surfaces of the photoconductor drums 1a to 1d so as to be developed into arbitrary toner images on the surfaces of the photoconductor drums 1a to 1d, respectively. Detailed configuration of the optical scanning device 5 will be described later.

An intermediate transfer belt 8 is an endless belt. The intermediate transfer belt 8 is stretched on a driving roller 10 and a driven roller 11. As the driving roller 10 is rotated by a motor (not shown), the intermediate transfer belt 8 is circulatively driven clockwise in FIG. 1.

The photoconductor drums 1a to 1d are arrayed so as to be adjacent to one another on the upper side Z1 of the intermediate transfer belt 8 along a sheet conveyance direction (arrow direction in FIG. 1). Also, the photoconductor drums 1a to 1d are each in contact with the intermediate transfer belt 8.

Primary transfer rollers 6a to 6d face the photoconductor drums 1a to 1d, respectively, with the intermediate transfer belt 8 interposed therebetween. The primary transfer rollers 6a to 6d are set each in pressure contact with the intermediate transfer belt 8. The primary transfer rollers 6a to 6d, together with the photoconductor drums 1a to 1d, make up a primary transfer part.

At specified timings, a primary transfer voltage is applied to the primary transfer rollers 6a to 6d. Then, toner images on the photoconductor drums 1a to 1d are primarily transferred successively to the intermediate transfer belt 8. As a result, a full-color toner image in which four-color toner images of magenta, cyan, yellow and black have been superimposed one on another with a specified positional relationship held thereamong is formed on the surface of the intermediate transfer belt 8.

A secondary transfer roller 9 faces the driving roller 10 with the intermediate transfer belt 8 interposed therebetween. The secondary transfer roller 9, being in pressure contact with the intermediate transfer belt 8, forms a secondary transfer part together with the driving roller 10. In this secondary transfer part, a secondary transfer voltage is applied to the secondary transfer roller 9. As a result, the toner image on the intermediate transfer belt 8 is secondarily transferred onto a sheet S. After the transfer of the toner image, a belt cleaning unit (not shown) cleans toner remaining on the intermediate transfer belt 8.

A sheet feed cassette 16 is provided in lower part within the image forming apparatus 100. The sheet feed cassette 16 is enabled to house a plurality of sheets S. A sheet conveyance path 19 is provided on the right side X1 of the sheet feed cassette 16.

The sheet conveyance path 19 conveys a sheet S fed out from the sheet feed cassette 16 to the secondary transfer part. Laid out on the upper right within the image forming apparatus 100 are a fixing unit 13 and a sheet conveyance path 20. The fixing unit 13 performs fixing process on the sheet S on which an image has been formed. The sheet conveyance path 20 conveys the sheet S, which has been subjected to the fixing process, to a sheet discharge part 17.

Sheets S contained in the sheet feed cassette 16 are fed out toward the sheet conveyance path 19, one by one, by a pickup roller 12a.

A registration roller pair 12b conveys the sheet S to the secondary transfer part while taking a timing for image forming operation at the intermediate transfer belt 8 as well as a timing for sheet feed operation toward the secondary transfer part. Onto the sheet S conveyed to the secondary transfer part, a full-color toner image on the intermediate transfer belt 8 is secondarily transferred by the secondary transfer roller 9 to which the secondary transfer voltage has been applied. The sheet S, to which the full-color toner image has been transferred, is conveyed to the fixing unit 13.

The fixing unit 13 includes a fixing belt to be heated by a heater, a fixing roller to be inscribed in the fixing belt, a pressure roller to be set into pressure contact with the fixing roller with the fixing belt interposed therebetween, and the like. The fixing unit 13 heats and pressurizes the sheet S to which the toner image has been transferred. Thus, the fixing process is fulfilled. The sheet S with the toner image having been fixed in the fixing unit 13 is inverted in terms of up/down facing on a sheet conveyance path 18, as required. Thereafter, the sheet S is conveyed to the secondary transfer part via the registration roller pair 12b again, and subsequently, a new toner image is secondarily transferred onto the backside of the sheet S by the secondary transfer roller 9, followed by fixing process by the fixing unit 13. The sheet S with the toner image fixed thereon passes through the sheet conveyance path 20 so as to be discharged onto the sheet discharge part 17.

### <2. Configuration of optical scanning device>

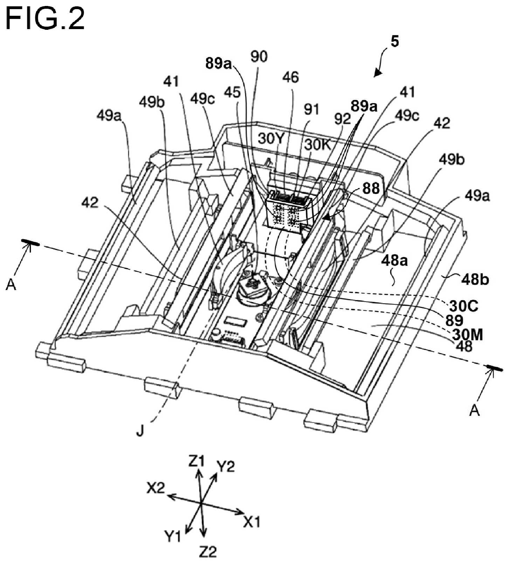

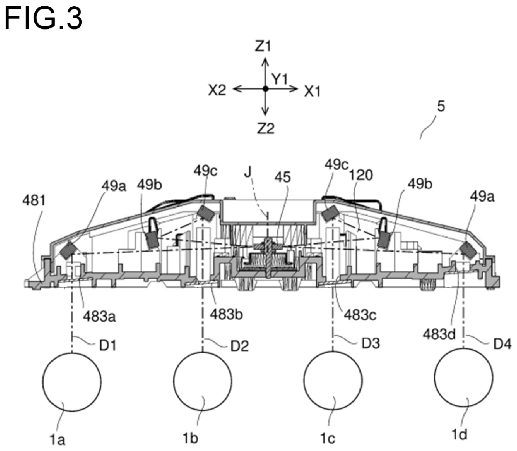

FIG. 2 is a perspective view of the optical scanning device 5. FIG. 3 is a cross-sectional view showing a cross section obtained by cutting the optical scanning device 5 by A-A sectional line shown in FIG. 2. In addition, FIG. 2 shows a state in which the cover portion of the optical scanning device 5 has been removed. FIGS. 2 and 3 schematically show the configuration of individual members, and do not strictly show shapes and positional relationships of the individual members.

In the following description, a main scanning direction (Y1-Y2 direction) refers to each longitudinal direction of reflecting mirrors 49a to 49c. The main scanning direction (Y1-Y2 direction) is congruous with each extending direction of rotational axes of the photoconductor drums 1a to 1d, as well as the front/rear direction of the image forming apparatus 100. A sub scanning direction (Z1-Z2 direction) refers to a direction parallel to a rotational axis J of a polygon mirror 45, and is congruous with the up/down direction of the image forming apparatus 100. Further, a left/right direction (X1-X2 direction) refers to a direction perpendicular to the main scanning direction (Y1-Y2 direction) as well as to the sub scanning direction (Z1-Z2 direction), and is congruous with a parallel-arrayed direction of the reflecting mirrors 49a to 49c.

The optical scanning device 5 outputs (irradiates) a plurality (four in this embodiment) of laser beams D1 to D4, which have been modulated in response to individual image signals, to the photoconductor drums 1a to 1d, respectively, to make the individual surfaces of the photoconductor drums 1a to 1d exposed to light, thereby forming electrostatic latent images with their charged levels attenuated.

The optical scanning device 5 includes a housing part 48, a light source part 46, a polygon mirror 45, a pair of first scanning lenses 41, a pair of second scanning lenses 42, and a pair of reflecting mirrors 49a, 49b, 49c.

The housing part 48 is an enclosure for containing internal constituents of the optical scanning device 5. The housing part 48 houses the light source part 46, the polygon mirror 45, the pair of first scanning lenses 41, the pair of second scanning lenses 42, and the individual reflecting mirrors 49a, 49b, 49c.

The housing part 48 has a bottom wall portion 48a, a peripheral wall portion 48b, and a light source housing portion 88. The bottom wall portion 48a extends in a direction perpendicular to the rotational axis J of the polygon mirror 45. The bottom wall portion 48a is provided with emission openings 483a to 483d that extend through in the up/down direction (see FIG. 3). The emission openings 483a to 483d extend in the main scanning direction (Y1-Y2 direction). The laser beams D1 to D4 emitted from a scanning optical system are emitted outward of the housing part 48 via the emission openings 483a to 483d so as to be incident on their corresponding photoconductor drums 1a to 1d, respectively.

The peripheral wall portion 48b extends upward from outer peripheral portion of the bottom wall portion 48a to internally surround, from sideways, the light source part 46, the polygon mirror 45, the pair of first scanning lenses 41, the pair of second scanning lenses 42, and the pairs of reflecting mirrors 49a, 49b, 49c.

The light source housing portion 88 internally houses the light source part 46 (more specifically, later-described light-emitting modules 30Y to 30K). The light source housing portion 88 includes a front face portion 89, and stationary wall portions 90, 91, 92.

The front face portion 89 is a platy member parallel to the left/right direction (X1-X2 direction). The front face portion 89 vertically rises and extends from the bottom wall portion 48a. The front face portion 89 is positioned between the light source part 46 and the polygon mirror 45 in the main scanning direction (Y1-Y2 direction).

The front face portion 89 has four openings 89a formed therein. The openings 89a are rectangular-shaped through holes passing through the front face portion 89 in the main scanning direction (Y1-Y2 direction). Individual laser beams D1 to D4 emitted from the light source part 46 pass through the openings 89a, respectively.

The stationary wall portions 90, 91, 92 are platy members parallel to the main scanning direction (Y1-Y2 direction). The stationary wall portions 90, 91, 92 vertically rises and extends from the bottom wall portion 48a. In other words, the stationary wall portions 90, 91, 92 protrude upward from the top face of the bottom wall portion 48a.

The stationary wall portion 90 abuts on one end (X2-side end portion) of the front face portion 89 in the left/right direction (X1-X2 direction). The stationary wall portion 92 abuts on the other end (X1-side end portion) of the front face portion 89 in the left/right direction (X1-X2 direction). The stationary wall portion 91 abuts on a central portion of the front face portion 89 in the left/right direction (X1-X2 direction). Each of the stationary wall portions 90, 91, 92 extends in one direction (Y2 direction) of the main scanning direction (Y1-Y2 direction) from the front face portion 89. In the light source housing portion 88, the light source part 46 is surrounded by the front face portion 89 and the stationary wall portions 90, 91, 92.

The stationary wall portions 90, 91, 92 hold the light source part 46 (more specifically, later-described light-emitting modules 30Y to 30K). Detailed configuration of the stationary wall portions 90, 91, 92 will be described later.

The light source part 46 emits laser beams D1 to D4. The light source part 46 emits the laser beams D1 to D4 in correspondence to the individual colors of Y (yellow), C (cyan), M (magenta) and K (black), respectively. The laser beams D1 to D4 emitted from the light source part 46 pass through the openings 89a so as to be applied to the polygon mirror 45. Detailed configuration of the light source part 46 will be described later.

The polygon mirror 45 rotates circumferentially about the rotational axis J. The rotational axis J extends in parallel with the sub scanning direction (Z1-Z2 direction). The polygon mirror 45 reflects the laser beams D1 to D4 emitted from the light source part 46 so as to scan the circumferential surfaces of the photoconductor drums (image carriers) 1a to 1d in the main scanning direction.

The polygon mirror 45 is composed of a plurality of reflection planes. In this embodiment, the polygon mirror 45 is a polyhedral mirror formed into a quadrangular prism shape. The laser beams D1, D2 having been incident on the polygon mirror 45 are deflectively scanned by an arbitrary rotationally-driven reflection plane so as to be reflected leftward (in X2 direction) by a reflection plane of the polygon mirror 45, thus being led to the first scanning lens 41 and the second scanning lens 42. Meanwhile, the laser beams D3, D4 having been incident on the polygon mirror 45 are deflectively scanned by an arbitrary rotationally-driven reflection plane so as to be reflected rightward (in X1 direction) by a reflection plane of the polygon mirror 45, thus being led to the first scanning lens 41 and the second scanning lens 42 (see FIG. 3).

The second scanning lenses 42 are placed more downstream of optical paths of the laser beams D1 to D4 than the first scanning lenses 41.

Each first scanning lens 41 is an elongated lens having a distortion (fθ characteristic) and extending along the main scanning direction (Y1-Y2 direction). The first scanning lens 41 condenses the laser beams D1 to D4 reflected by a deflection plane of the polygon mirror 45.

Each second scanning lens 42, like the first scanning lens 41, is an elongated lens having a distortion (fθ characteristic) and extending along the main scanning direction (Y1-Y2 direction). The second scanning lens 42 condenses the laser beams D1 to D4 having passed through the first scanning lens 41 to form images on scanned surfaces of the photoconductor drums 1a to 1d, respectively.

The pair of reflecting mirrors 49a reflect the laser beams D1, D4, respectively. The pair of reflecting mirrors 49b, and the pair of reflecting mirrors 49c reflect the laser beams D2, D3, respectively.

The laser beam D1 condensed by the first scanning lens 41 and the second scanning lens 42 is reflected by the reflecting mirror 49a so as to form an image on the scanned surface of the photoconductor drum 1a. The laser beam D4 condensed by the first scanning lens 41 and the second scanning lens 42 is reflected by the reflecting mirror 49a so as to form an image on the scanned surface of the photoconductor drum 1d.

The laser beam D2 condensed by the first scanning lens 41 and the second scanning lens 42 is reflected by the reflecting mirrors 49b, 49c so as to form an image on the scanned surface of the photoconductor drum 1b. The laser beam D3 condensed by the first scanning lens 41 and the second scanning lens 42 is reflected by the reflecting mirrors 49b, 49c so as to form an image on the scanned surface of the photoconductor drum 1c.

The laser beams D1 to D4 deflectively reflected by the polygon mirror 45 pass through the first scanning lens 41 and the second scanning lens 42 so as to be condensed on the scanned surfaces of the photoconductor drums 1a to 1d, respectively. As a result, beam spots are formed on the scanned surfaces of the photoconductor drums 1a to 1d, respectively. Also, the laser beams D1 to D4 condensed on the scanned surfaces of the photoconductor drums 1a to 1d, respectively, are subjected to constant-speed scanning on the scanned surfaces of the photoconductor drums 1a to 1d.

In this process, by rotation of the polygon mirror 45, the laser beams D1 to D4 scan the scanned surfaces (circumferential surfaces) of the photoconductor drums (image carriers) 1a to 1d in the main scanning direction (Y1-Y2 direction). Further, the laser beams D1 to D4 scan in the sub scanning direction (Z1-Z2 direction) by rotation of the photoconductor drums 1a to 1d so as to form electrostatic latent images on the surfaces of the photoconductor drums 1a to 1d, respectively.

### <3. Configuration of light source part 46>

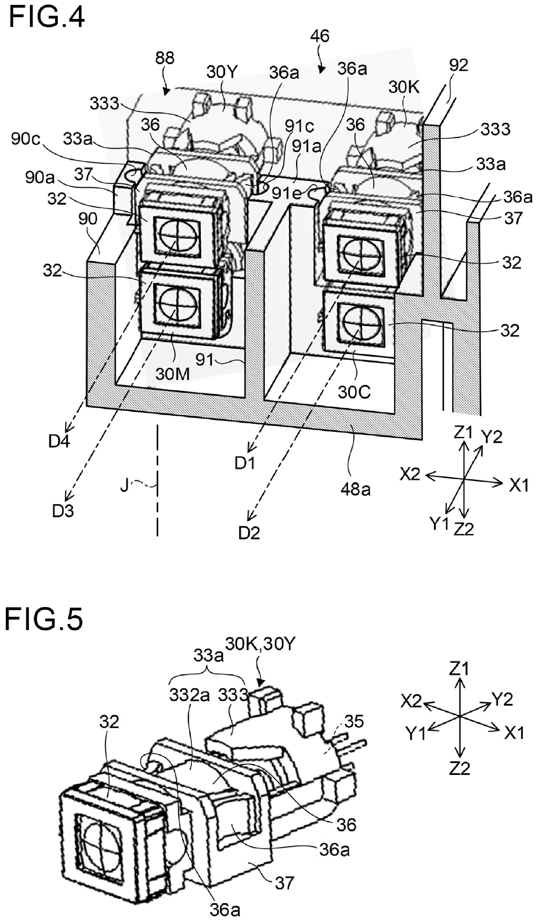

FIG. 4 is a perspective view showing the light source part 46 in enlargement. As shown in FIG. 4, the light source part 46 is composed by including the light-emitting modules 30Y, 30C, 30M, 30K. The light-emitting modules 30Y to 30K output laser beams D1 to D4, respectively.

The light-emitting modules 30Y to 30K are fixed to the stationary wall portions 90 to 92 via adhesive 95. Details of fixation of the light-emitting modules 30Y to 30K to the stationary wall portions 90 to 92 will be described later.

The light-emitting modules 30K, 30C are positioned on the right side (X1 side) of the rotational axis J, as viewed from the polygon mirror 45 in the main scanning direction (Y1-Y2 direction). The light-emitting module 30C is positioned on the lower side (Z2 side) of the light-emitting module 30K. The light-emitting modules 30Y, 30M are positioned on the left side (X2 side) of the rotational axis J, as viewed from the polygon mirror 45 in the main scanning direction (Y1-Y2 direction). The light-emitting module 30M is positioned on the lower side (Z2 side) of the light-emitting module 30Y.

The light-emitting modules 30K, 30Y are identical in shape to each other. Also, the light-emitting modules 30C, 30M are identical in shape to each other. Further, the light-emitting modules 30K, 30Y and the light-emitting modules 30C, 30M are different in shape (more specifically, shape of later-described brackets 33a, 33b) from each other.

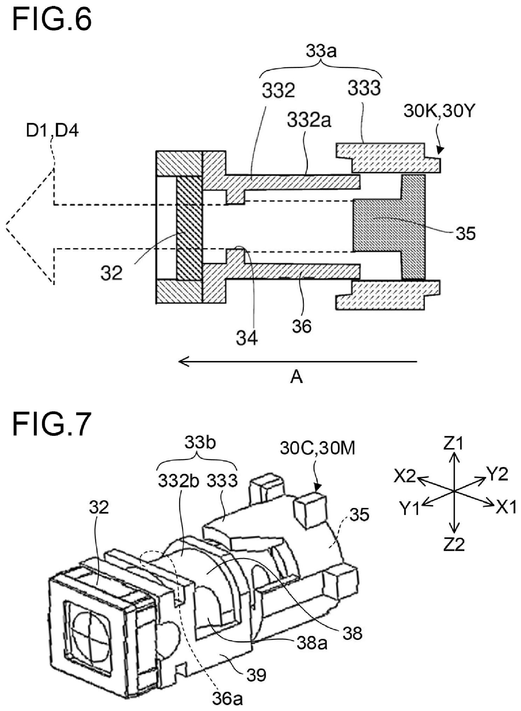

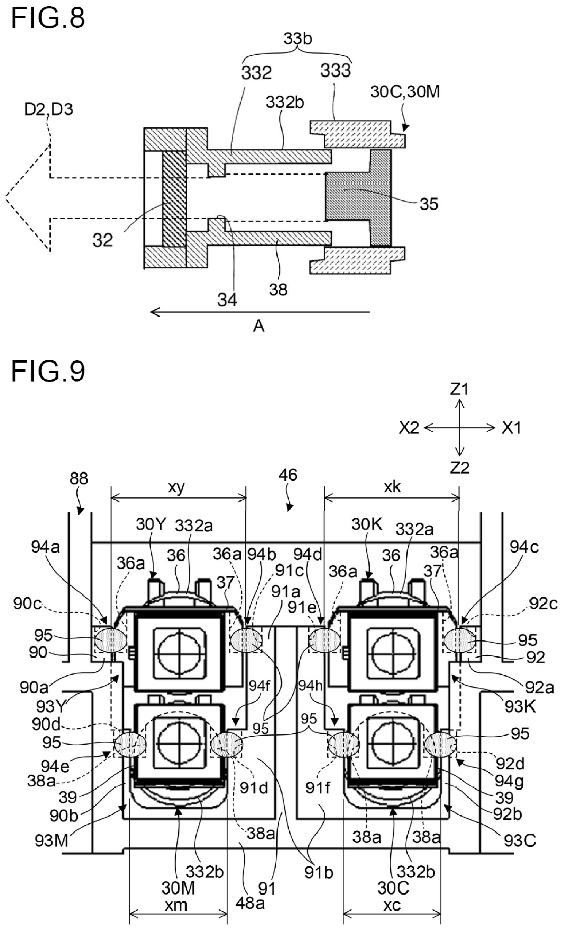

FIG. 5 is a perspective view of the light-emitting modules 30K, 30Y. FIG. 6 is a cross-sectional view obtained by cutting the light-emitting modules 30K, 30Y along the optical axis. FIG. 7 is a perspective view of the light-emitting modules 30C, 30M. FIG. 8 is a cross-sectional view obtained by cutting the light-emitting modules 30C, 30M along the optical axis.

As shown in FIGS. 5 to 8, each of the light-emitting modules 30Y to 30K includes a light-emitting element 35 and a coupling lens 32. In addition, the light-emitting modules 30Y, 30K each have a bracket 33a (see FIGS. 5 and 6). Also, the light-emitting modules 30C, 30M each have a bracket 33b (see FIGS. 7 and 8).

The light-emitting element 35 of the light-emitting module 30K emits a laser beam D1. Also, the light-emitting element 35 of the light-emitting module 30C emits a laser beam D2. Also, the light-emitting element 35 of the light-emitting module 30M emits a laser beam D3. Further, the light-emitting element 35 of the light-emitting module 30Y emits a laser beam D4.

The coupling lens 32 is an anamorphic lens. Each coupling lens 32 converts a laser beam (laser beams D1 to D4) emitted from a light-emitting element 35 into light generally parallel to the main scanning direction, and moreover makes the laser beam condensed in the sub scanning direction. As a result, line images are formed near deflective planes of the polygon mirror 45.

The brackets 33a, 33b are each a cylindrical member extending in an emission direction (direction along arrow A in the figure) of laser beams. The brackets 33a, 33b each hold the light-emitting element 35 inside. Also, the brackets 33a, 33b each hold the coupling lens 32 at their front end portion. A concrete configuration of the brackets 33a, 33b is as follows.

Each bracket 33a, 33b is a resin molded product, for which synthetic resins having light weight and heat resistance (e.g., alloy material of ABS resin and PC resin) or the like is preferably used. The bracket 33a is composed by including a lens holder 332a and an element holder 333 (see FIGS. 5 and 6). The bracket 33b is composed by including a lens holder 332b and an element holder 333 (see FIGS. 7 and 8).

Each of the lens holders 332a, 332b has a throttle portion 34. The throttle portion 34 adjusts a beam spot diameter of the laser beams D1 to D4 to a desired diameter. Details of this are as follows.

The throttle portion 34 is a cylindrical tubular rib protruding inward of the radial direction from inner circumferential surfaces of the lens holder 332a, 332b, respectively (more specifically, from inner circumferential surfaces of later-described annular portions 36, 38). That is, the lens holders 332a, 332b are each internally formed into a throttle shape at the throttle portion 34. As a result, optical paths for laser light (laser beams D1 to D4) passing through inside are narrowed. Thus, it becomes possible to adjust the diameter of the laser light (laser beams D1 to D4) to an arbitrary size.

The lens holder 332a and the lens holder 332b differ in shape from each other. Details of this are as follows.

As shown in FIGS. 5 and 6, the lens holder 332a has an annular portion 36 and a protruding portion 37. The annular portion 36 is formed into a cylindrical shape. The above-described throttle portion 34 is formed inside the annular portion 36.

A pair of recessed portions 36a are formed on the outer circumferential surface of the annular portion 36. The recessed portions 36a are recessed inwardly from left/right-direction (X1-X2 direction) both end portions of the annular portion 36, respectively. Also, the recessed portions 36a extend in the Z2 direction. The recessed portions 36a are formed each into a generally semicircular shape as viewed in a plan view from above.

The protruding portion 37 protrudes from the outer circumferential surface of the annular portion 36 on both sides along the left/right direction (X1-X2 direction). The pair of recessed portions 36a each have a bottom serving also as an upper end portion (downstream-side end portion in Z1 direction) of the protruding portion 37.

As shown in FIGS. 7 and 8, the lens holder 332b has an annular portion 38 and a protruding portion 39. The annular portion 38 is formed into a cylindrical shape. Inside the annular portion 38, the above-mentioned throttle portion 34 is formed.

A pair of recessed portions 38a are formed on the outer circumferential surface of the annular portion 38. Each recessed portion 38a is recessed inwardly from left/right-direction (X1-X2 direction) both end portions of the annular portion 38. Also, the recessed portion 38a extends in the Z2 direction. The recessed portions 38a are formed each into a generally semicircular shape as viewed in a plan view from above.

The protruding portion 39 protrudes from the annular portion 38 on both sides along the left/right direction (X1-X2 direction). A protrusion extent of the protruding portion 39 from the annular portion 38 is smaller than a protrusion extent of the protruding portion 37 from the annular portion 36. In other words, as shown in FIG. 7, a both-end width of the protruding portion 39 in the left/right direction (X1-X2 direction) is smaller than a both-end width of the protruding portion 37 in the left/right direction (X1-X2 direction).

Reverting to FIGS. 5 and 6, the coupling lens 32 is bonded and fixed, with adhesive, to one end of each of the lens holders 332a, 332b in the emission direction (direction along the arrow A in the figure). Laser light (laser beams D1 to D4) emitted from the light-emitting element 35 passes through the coupling lens 32 so as to be emitted outward of the brackets 33a, 33b.

The element holder 333 is fixed at the other end (end portion on the side opposite to the coupling lens 32) of the lens holders 332a, 332b in the emission direction (direction along the arrow A in the figure). The element holder 333 internally holds the light-emitting element 35. More specifically, the light-emitting element 35 is press-fitted and fixed inside the element holder 333. The lens holders 332a, 332b and the element holder 333 are fixed at specified positions with adhesive. Details of bonding and fixing of the element holder 333, the coupling lens 32, and the lens holders 332a, 332b will be described later.

### <On stationary wall portions 90 to 92>

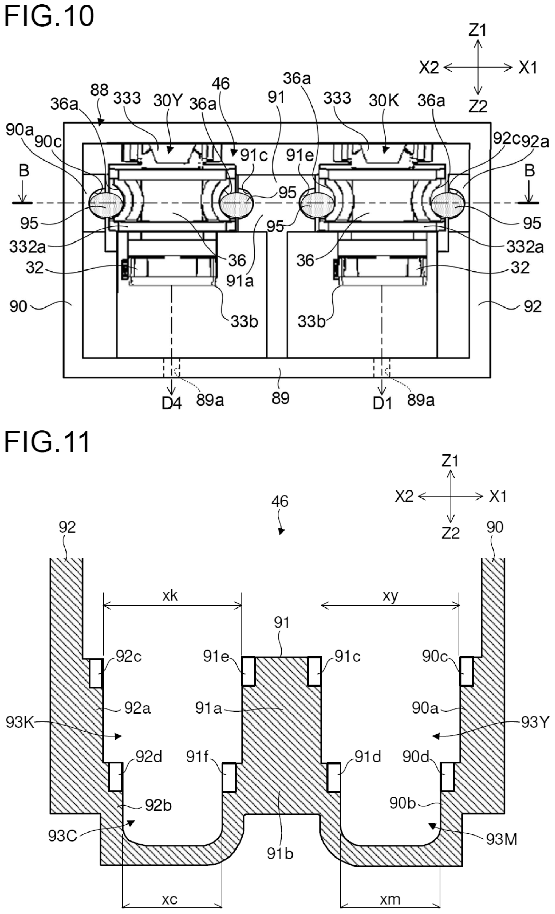

FIG. 9 is a plan view of the light source part 46 as it is viewed from the downstream side of the laser beams D1 to D4 in the emission direction. FIG. 10 is a plan view of the light source part 46 as it is viewed from above. FIG. 11 is a cross-sectional view showing a cross section cut by B-B sectional line shown in FIG. 10. As shown in FIGS. 4 and 9 to 11, each of the stationary wall portions 90 to 92 is a rib provided so as to upwardly rise from the bottom wall portion 48a.

In the left/right direction (X1-X2 direction), the stationary wall portion 91 is positioned between the stationary wall portion 90 and the stationary wall portion 92. The light-emitting modules 30Y, 30M are placed between the stationary wall portion 90 and the stationary wall portion 91. The light-emitting modules 30K, 30C are placed between the stationary wall portion 91 and the stationary wall portion 92.

The stationary wall portion 90 has facing portions 90a, 90b. The facing portion 90a is juxtaposed with the facing portion 90b in the up/down direction. The facing portion 90a is a portion of the stationary wall portion 90 positioned above the facing portion 90b.

The facing portion 90a faces the protruding portion 37 (more specifically, later-described recessed portion 36a) of the light-emitting module 30Y in the left/right direction (X1-X2 direction). The facing portion 90b faces the protruding portion 39 (more specifically, later-described recessed portion 38a) of the light-emitting module 30M in the left/right direction (X1-X2 direction).

A range from the facing portion 90a to the facing portion 90b is stepwise-shaped. More specifically, it is as follows. X1-direction end portions of the facing portions 90a, 90b are formed into flat surfaces parallel to the sub scanning direction (Z1-Z2 direction). The X1-direction end portion of the facing portion 90a is positioned on the downstream side (a side closer to the stationary wall portion 91) of the X1 direction. Upper end portions of the facing portions 90a, 90b are formed into flat surfaces parallel to the left/right direction (X1-X2 direction).

The facing portion 90a has a recessed portion 90c formed therein. The recessed portion 90c is so formed as to extend in the X2 direction from an X1-direction end portion of the facing portion 90a. The recessed portion 90c is opened at an upper end portion of the facing portion 90a, extending downward from this opening. In other words, the recessed portion 90c is opened at an upper end portion of the facing portion 90a as well as at an X1-direction end portion of the facing portion 90a. The recessed portion 90c is formed into a generally semicircular shape as viewed in a plan view from above. That is, the recessed portion 90c is a semicylindrical-shaped recessed portion.

The facing portion 90b has a recessed portion 90d formed therein. The recessed portion 90d is so formed as to extend in the X2 direction from an X1-direction end portion of the facing portion 90b. The recessed portion 90d is opened at an upper end portion of the facing portion 90b, extending downward from this opening. In other words, the recessed portion 90d is opened at an upper end portion of the facing portion 90b as well as at an X1-direction end portion of the facing portion 90b. The recessed portion 90d is formed into a generally semicircular shape as viewed in a plan view from above. That is, the recessed portion 90d is a semicylindrical-shaped recessed portion.

The stationary wall portion 91 has facing portions 91a, 91b. The facing portion 91a is juxtaposed with the facing portion 91b in the sub scanning direction (Z1-Z2 direction). The facing portion 91a is a portion of the stationary wall portion 91 positioned above the facing portion 91b.

The facing portion 91a faces the protruding portion 37 (more specifically, later-described recessed portion 36a) of the light-emitting module 30Y in the left/right direction (X1-X2 direction). The facing portion 91a also faces the protruding portion 37 (more specifically, later-described recessed portion 36a) of the light-emitting module 30K in the left/right direction (X1-X2 direction). The facing portion 91b faces the protruding portion 39 (more specifically, later-described recessed portion 38a) of the light-emitting module 30M in the left/right direction (X1-X2 direction). The facing portion 91b also faces the protruding portion 39 (more specifically, later-described recessed portion 38a) of the light-emitting module 30C in the left/right direction (X1-X2 direction).

A range from the facing portion 91a to the facing portion 91b is stepwise-shaped. More specifically, it is as follows. X2-direction end portions of the facing portions 91a, 91b are formed into flat surfaces parallel to the sub scanning direction (Z1-Z2 direction). The X2-direction end portion of the facing portion 91a is positioned on the downstream side (a side closer to the stationary wall portion 90) of the X2 direction. Upper end portions of the facing portions 91a, 91b are formed into flat surfaces parallel to the left/right direction (X1-X2 direction).

The facing portion 91a has recessed portions 91c, 91e formed therein. The recessed portion 91c is so formed as to extend in the X1 direction from an X2-direction end portion of the facing portion 91a. The recessed portion 91e is so formed as to extend in the X2 direction from an X1-direction end portion of the facing portion 91a. Each of the recessed portions 91c, 91e is opened at an upper end portion of the facing portion 91a, extending downward from this opening. Each of the recessed portions 91c, 91e is formed into a generally semicircular shape as viewed in a plan view from above. That is, each of the recessed portions 91c, 91e is a semicylindrical-shaped recessed portion.

The facing portion 91b has recessed portions 91d, 91f formed therein. The recessed portion 91d is so formed as to extend in the X1 direction from an X2-direction end portion of the facing portion 91b. The recessed portion 91f is so formed as to extend in the X2 direction from an X1-direction end portion of the facing portion 91b. Each of the recessed portions 91d, 91f is opened at an upper end portion of the facing portion 91b, extending downward from this opening. Each of the recessed portions 91d, 91f is formed into a generally semicircular shape as viewed in a plan view from above. That is, each of the recessed portions 91d, 91f is a semicylindrical-shaped recessed portion.

The stationary wall portion 92 has facing portions 92a, 92b. The facing portion 92a is juxtaposed with the facing portion 92b in the up/down direction. The facing portion 92a is a portion of the stationary wall portion 92 positioned above the facing portion 92b.

The facing portion 92a faces the protruding portion 37 (more specifically, recessed portion 36a) of the light-emitting module 30K in the left/right direction (X1-X2 direction). Also, the facing portion 92b faces the protruding portion 39 (more specifically, recessed portion 38a) of the light-emitting module 30C in the left/right direction (X1-X2 direction).

A range from the facing portion 92a to the facing portion 92b is stepwise-shaped. More specifically, it is as follows. X2-direction end portions of the facing portions 92a, 92b are formed into flat surfaces parallel to the sub scanning direction (Z1-Z2 direction). The X2-direction end portion of the facing portion 92a is positioned on the downstream side (a side closer to the stationary wall portion 91) of the X2 direction. Upper end portions of the facing portions 92a, 92b are formed into flat surfaces parallel to the left/right direction (X1-X2 direction).

The facing portion 92a has a recessed portion 92c formed therein. The recessed portion 92c is opened at an upper end portion of the facing portion 92a, extending downward from this opening. The recessed portion 92c is so formed as to extend in the X1 direction from an X2-direction end portion of the facing portion 92a. In other words, the recessed portion 92c is opened at an upper end portion of the facing portion 92a as well as at an X1-direction end portion of the facing portion 92a. The recessed portion 92c is formed into a generally semicircular shape as viewed in a plan view from above. That is, the recessed portion 92c is a semicylindrical-shaped recessed portion.

The facing portion 92b has a recessed portion 92d formed therein. The recessed portion 92d is opened at an upper end portion of the facing portion 92b, extending downward from this opening. The recessed portion 92d is so formed as to extend in the X1 direction from an X2-direction end portion of the facing portion 92b. In other words, the recessed portion 92d is opened at an upper end portion of the facing portion 92b as well as at an X1-direction end portion of the facing portion 92b. The recessed portion 92d is formed into a generally semicircular shape as viewed in a plan view from above. That is, the recessed portion 92d is a semicylindrical-shaped recessed portion.

As shown in FIGS. 9 to 11, the facing portion 90a and the facing portion 91a face each other in the left/right direction (X1-X2 direction) with the light-emitting module 30Y interposed therebetween. Between the facing portion 90a and the facing portion 91a in the left/right direction (X1-X2 direction), a module housing space 93Y is defined. The light-emitting module 30Y is placed within the module housing space 93Y.

In the left/right direction (X1-X2 direction), the facing portion 90b and the facing portion 91b face each other with the light-emitting module 30M interposed therebetween. In the left/right direction (X1-X2 direction), a module housing space 93M is defined between the facing portion 90b and the facing portion 91b. The light-emitting module 30M is placed within the module housing space 93M.

A facing interval xy between the facing portion 90a and the facing portion 91a in the left/right direction (X1-X2 direction) is larger than a facing interval xm between the facing portion 90b and the facing portion 91b in the left/right direction (X1-X2 direction).

In the left/right direction (X1-X2 direction), the facing portion 91a and the facing portion 92a face each other with the light-emitting module 30K interposed therebetween. In the left/right direction (X1-X2 direction), a module housing space 93K is defined between the facing portion 91a and the facing portion 92a. The light-emitting module 30K is placed within the module housing space 93K.

In the left/right direction (X1-X2 direction), the facing portion 91b and the facing portion 92b face each other with the light-emitting module 30C interposed therebetween. In the left/right direction (X1-X2 direction), a module housing space 93C is defined between the facing portion 91b and the facing portion 92b. The light-emitting module 30C is placed within the module housing space 93C.

A facing interval xk between the facing portion 91a and the facing portion 92a in the left/right direction (X1-X2 direction) is larger than a facing interval xc between the facing portion 91b and the facing portion 92b in the left/right direction (X1-X2 direction).

### <On module housing space 93Y>

One (downstream-side one in X2 direction) of the pair of recessed portions 36a in the light-emitting module 30Y, and the recessed portion 90c, are positioned identical in the main scanning direction (Y1-Y2 direction). These recessed portion 36a and recessed portion 90c are arrayed to make up an adhesive housing recessed portion 94a. In other words, the adhesive housing recessed portion 94a is a recessed portion of an upper end opening formed over a range from the facing portion 90a to the annular portion 36 of the light-emitting module 30Y. The adhesive housing recessed portion 94a is formed into a generally circular shape as viewed in a plan view from above. That is, the adhesive housing recessed portion 94a is a generally cylindrical-shaped recessed portion.

The other (downstream-side one in X1 direction) recessed portion 36a in the light-emitting module 30Y, and the recessed portion 91c, are positioned identical in the main scanning direction (Y1-Y2 direction). These recessed portion 36a and recessed portion 91c are arrayed to make up an adhesive housing recessed portion 94b. In other words, the adhesive housing recessed portion 94b is a recessed portion of an upper end opening formed over a range from the facing portion 91a to the annular portion 36 of the light-emitting module 30Y. The adhesive housing recessed portion 94b is formed into a generally circular shape as viewed in a plan view from above. That is, the adhesive housing recessed portion 94b is a generally cylindrical-shaped recessed portion.

### <On module housing space 93K>

One (downstream-side one in X1 direction) of the pair of recessed portions 36a in the light-emitting module 30K, and the recessed portion 92c, are positioned identical in the main scanning direction (Y1-Y2 direction). These recessed portion 36a and recessed portion 92c are arrayed to make up an adhesive housing recessed portion 94c. In other words, the adhesive housing recessed portion 94c is a recessed portion of an upper end opening formed over a range from the facing portion 92a to the annular portion 36 of the light-emitting module 30K. The adhesive housing recessed portion 94c is formed into a generally circular shape as viewed in a plan view from above. That is, the adhesive housing recessed portion 94c is a generally cylindrical-shaped recessed portion.

The other (downstream-side one in X2 direction) recessed portion 36a in the light-emitting module 30K, and the recessed portion 91e, are positioned identical in the main scanning direction (Y1-Y2 direction). These recessed portion 36a and recessed portion 91e are arrayed to make up an adhesive housing recessed portion 94d. In other words, the adhesive housing recessed portion 94d is a recessed portion of an upper end opening formed over a range from the facing portion 91a to the annular portion 36 of the light-emitting module 30K. The adhesive housing recessed portion 94d is formed into a generally circular shape as viewed in a plan view from above. That is, the adhesive housing recessed portion 94d is a generally cylindrical-shaped recessed portion.

### <On module housing space 93M>

One (downstream-side one in X2 direction) of the pair of recessed portions 38a in the light-emitting module 30M, and the recessed portion 90d, are positioned identical in the main scanning direction (Y1-Y2 direction). These recessed portion 38a and recessed portion 90d are arrayed to make up an adhesive housing recessed portion 94e. In other words, the adhesive housing recessed portion 94e is a recessed portion of an upper end opening formed over a range from the facing portion 90b to the annular portion 38 of the light-emitting module 30M. The adhesive housing recessed portion 94e is formed into a generally circular shape as viewed in a plan view from above. That is, the adhesive housing recessed portion 94e is a generally cylindrical-shaped recessed portion.

The other (downstream-side one in X1 direction) recessed portion 38a in the light-emitting module 30M, and the recessed portion 91d, are positioned identical in the main scanning direction (Y1-Y2 direction). These recessed portion 38a and recessed portion 91d are arrayed to make up an adhesive housing recessed portion 94f. In other words, the adhesive housing recessed portion 94f is a recessed portion of an upper end opening formed over a range from the facing portion 91b to the annular portion 38 of the light-emitting module 30M. The adhesive housing recessed portion 94f is formed into a generally circular shape as viewed in a plan view from above. That is, the adhesive housing recessed portion 94f is a generally cylindrical-shaped recessed portion.

### <On module housing space 93C>

One (downstream-side one in X1 direction) of the pair of recessed portions 38a in the light-emitting module 30C, and the recessed portion 92d, are positioned identical in the main scanning direction (Y1-Y2 direction). These recessed portion 38a and recessed portion 92d are arrayed to make up an adhesive housing recessed portion 94g. In other words, the adhesive housing recessed portion 94g is a recessed portion of an upper end opening formed over a range from the facing portion 92b to the annular portion 38 of the light-emitting module 30C. The adhesive housing recessed portion 94g is formed into a generally circular shape as viewed in a plan view from above. That is, the adhesive housing recessed portion 94g is a generally cylindrical-shaped recessed portion.

The other (downstream-side one in X2 direction) recessed portion 38a in the light-emitting module 30C, and the recessed portion 91f, are positioned identical in the main scanning direction (Y1-Y2 direction). These recessed portion 38a and recessed portion 91f are arrayed to make up an adhesive housing recessed portion 94h. In other words, the adhesive housing recessed portion 94h is a recessed portion of an upper end opening formed over a range from the facing portion 91b to the annular portion 38 of the light-emitting module 30C. The adhesive housing recessed portion 94h is formed into a generally circular shape as viewed in a plan view from above. That is, the adhesive housing recessed portion 94h is a generally cylindrical-shaped recessed portion.

### <On alignment of optical axis>

Correction for any optical-axis shift of the laser beams D1 to D4 is fulfilled by alignment in assembling of the light-emitting modules 30Y to 30K. Here is described assembling of the light-emitting modules 30Y to 30K. It is noted that the assembling process is common among the light-emitting modules 30Y to 30K. Therefore, only the assembling of the light-emitting module 30Y will be described below, and the assembling of the light-emitting modules 30K, 30C, 30M is omitted in description.

First, the coupling lens 32 and the lens holder 332a (lens holder 332b) are bonded and fixed in a previously specified positional relationship. Then the coupling lens 32 and the lens holder 332a (lens holder 332b) are set (temporarily fixed) onto an alignment unit (not shown) including the first scanning lens 41 and the second scanning lens 42. Next, the element holder 333 with the light-emitting element 35 held thereon is prepared.

Then, against the temporarily fixed lens holder 332a (lens holder 332b), the element holder 333 is moved in three axial directions (X1-X2 direction, Y1-Y2 direction, and Z1-Z2 direction), respectively. Also, the element holder 333 is rotated circumferentially about an optical axis of laser light (laser beams D1 to D4).

Moving the element holder 333 in the left/right direction (X1-X2 direction) and the sub scanning direction (Z1-Z2 direction) allows the laser light (laser beams D1 to D4) to undergo alignment of its optical-axis position in the left/right direction (X1-X2 direction) and the sub scanning direction (Z1-Z2 direction). Also, moving the element holder 333 in the main scanning direction (Y1-Y2 direction) allows the laser light (laser beams D1 to D4) for the first scanning lens 41 to undergo alignment of the optical-axis incident angle. Further, rotating the element holder 333 allows any optical-axis error in the horizontal direction due to any lens manufacturing error to be corrected.

More specifically, it is arranged that laser beams D1 to D4 go incident on the first scanning lens 41 in a way that individual optical axes of the laser beams become parallel to one another. As a result of this, focusing positions in the main scanning direction are determined. In this state, the lens holder 332a (lens holder 332b) and the element holder 333 are bonded and fixed. For this bonding, an adhesive composed of ultraviolet curable resin as an example may be employed.

In addition, the above-described alignment and bonding is performed in a set-up state of the alignment unit (not shown) while optical-axis positions of the laser beams D1 to D4 as well as beam diameters in the main scanning direction are being checked. Subsequently, the adhesive composed of ultraviolet curable resin is applied to achieve bonding and fixing of the lens holder 332a (lens holder 332b) and the element holder 333 by ultraviolet irradiation.

Then, the light-emitting module 30Y is removed from the alignment unit, and bonded and fixed to the housing part 48. The bonding and fixing of the light-emitting modules 30Y to 30K to the housing part 48 is as follows.

### <4. Fixing method of light-emitting modules>

The adhesive 95 is applied to the adhesive housing recessed portions 94a to 94h each in equal quantity. The adhesive 95 is an ultraviolet curable resin. Fixing sequence of the light-emitting modules 30Y to 30K to the stationary wall portions 90 to 92 is as follows.

First, the light-emitting modules 30M, 30C are set in the module housing spaces 93M, 93C, respectively. Next, the ultraviolet curable resin of an uncured state is injected into each of the adhesive housing recessed portions 94e to 94h. Subsequently, ultraviolet rays are irradiated toward the adhesive housing recessed portions 94e to 94h from outside of the stationary wall portions 90 to 92, respectively. As a result of this, the ultraviolet curable resin is cured, so that the light-emitting module 30M is bonded to the stationary wall portions 90, 91, and the light-emitting module 30C is bonded to the stationary wall portions 91, 92.

Next, the light-emitting modules 30Y, 30K are set in the module housing spaces 93Y, 93K, respectively. Subsequently, the ultraviolet curable resin of an uncured state is injected into each of the adhesive housing recessed portions 94a to 94d. Then, ultraviolet rays are irradiated toward the adhesive housing recessed portions 94a to 94d from outside of the stationary wall portions 90 to 92, respectively. As a result of this, the ultraviolet curable resin is cured, so that the light-emitting module 30Y is bonded to the stationary wall portions 90, 91, and the light-emitting module 30K is bonded to the stationary wall portions 91, 92.

As described above, the light-emitting modules 30Y to 30K are fixed directly to the stationary wall portions 90, 91, 92 with the adhesive 95. Therefore, the light-emitting modules 30Y to 30K can be fixed with ease under execution of the alignment of their orientation. Furthermore in this process, by the above-described alignment, directions of the laser beams D1 to D4 can be finely adjusted in three dimensions in the left/right direction (X1-X2 direction), the main scanning direction (Y1-Y2 direction), and the sub scanning direction (Z1-Z2 direction). Therefore, optical-axis positions of the laser beams D1 to D4 can be adjusted, so that their positional shifts can be corrected.

Also as described above, the facing interval xy and the facing interval xm differ from each other. Similarly, the facing interval xk and the facing interval xc differ from each other. That is, the module housing spaces 93M, 93C and the module housing spaces 93Y, 93K differ in shape from each other. This is due to mold configuration in vicinities of the stationary wall portions 90 to 92 involved in molding process of the housing part 48. On the assumption that the module housing spaces 93M, 93C and the module housing spaces 93Y, 93K are identical in shape to each other, the mold structure of around the stationary wall portions 90 to 92 would be extremely complicated, leading to a fear for increases in manufacturing cost as well as increases in manufacturing errors due to after-molding shrinkage cavities or the like.

In contrast to this, the light-emitting modules 30K, 30Y and the light-emitting modules 30C, 30M are made different in shape from each other, as described above. Therefore, the light-emitting modules 30K, 30Y and the light-emitting modules 30C, 30M can be set in the module housing spaces 93M, 93C and the module housing spaces 93Y, 93K, respectively, which are of different shapes.

Then, as described above, the adhesive 95 is applied to the adhesive housing recessed portions 94a to 94h each at an equal quantity of the adhesive 95. With such a configuration, each of the light-emitting modules 30K, 30Y, 30C, 30M is bonded to the stationary wall portions 90 to 92 with the equal quantity of the adhesive 95 from both sides of the left/right direction (X1-X2 direction). Therefore, in curing of the adhesive 95, it becomes less likely that the light-emitting modules 30K, 30Y, 30C, 30M incur inclinations, stress concentration, and the like due to application nonuniformities of the adhesive 95. That is, it becomes achievable to correct optical-axis shifts of the laser beams D1 to D4 more preferably. Accordingly, there can be provided an optical scanning device 5 capable of suppressing performance degradation of the image forming apparatus 100 while suppressing increases in manufacturing cost.

Otherwise, the present disclosure, not being limited to the above-described embodiment, may be changed and modified in various ways without departing from the gist of the disclosure. For example, on condition that the brackets of the light-emitting modules placed on the upper and lower sides, respectively, are similar in shape to those of the above embodiment, the color array of the laser beams D1 to D4 emitted from the light-emitting modules 30Y, 30C, 30M, 30K is not particularly limited. It is allowable, for example, to emit laser beams of C (cyan) or M (magenta) from the light-emitting modules on the upper side.

Further, the adhesive housing recessed portion 94a is provided over a range from the annular portion 36 of the light-emitting module 30Y to the facing portion 90a in the above embodiment. However, this is not limitative. That is, the adhesive housing recessed portion 94a may also be provided in at least one of the annular portion 36 or the facing portion 90a. In other words, it is structurally allowable that one of the recessed portion 36a or the recessed portion 90c is omitted.

This is also applicable to the adhesive housing recessed portions 94b to 94h. That is, it is also structurally allowable that only the recessed portions (36a, 38a, 90c, 90d, 91c, 91d, 91e, 91f, 92c, 92d) are provided in only either one of annular portions (36, 38) of the light-emitting modules (30Y to 30K) or the facing portions (90a, 90b, 91a, 91b, 92a, 92b).

Even in cases where such a configuration is adopted, each of the light-emitting modules 30Y to 30K is bonded on both sides of the left/right direction (X1-X2 direction) with an equal quantity of the adhesive 95.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. An optical scanning device (5) comprising:
a light source part (46) having a plurality of light-emitting modules (30Y to 30K) each for emitting a laser beam (D1 to D4);
a polygon mirror (45) which rotates about a rotational axis (J) extending in an up/down direction to reflect the laser beam (D1 to D4) emitted from the light source part (46) so that a circumferential surface of an image carrier (1a to 1d) is scanned in a main scanning direction;
a scanning lens (41, 42) for forming an image from the laser beam (D1 to D4), which has been reflected by the polygon mirror (45), on the circumferential surface of the image carrier (1a to 1d); and
a housing part (48) for housing the light source part (46), the polygon mirror (45), and the scanning lens (41, 42), wherein
each of the plurality of light-emitting modules (30Y to 30K) includes:
a light-emitting element (35) for emitting the laser beam (D1 to D4);
a coupling lens (32) for converting the laser beam (D1 to D4) emitted from the light-emitting element (35) into a laser beam generally parallel to the main scanning direction and also for condensing the laser beam to a sub scanning direction; and
a bracket (33a, 33b) which extends in an emission direction of the laser beam (D1 to D4) to hold the light-emitting element (35) and the coupling lens (32), and which is cylindrical-shaped, and
the housing part (48) has:
a bottom portion (48a) which extends in a direction perpendicular to the rotational axis (J); and
a plurality of stationary wall portions (90 to 92) which protrude upward from the bottom portion (48a) and which are arrayed in a widthwise direction perpendicular to the emission direction,
each of the light-emitting modules (30Y to 30K) is placed between neighboring ones of the stationary wall portions (90 to 92), and is bonded and fixed to the stationary wall portions (90 to 92) with adhesive (95) applied to between widthwise both end portions (37, 39) of the bracket (33a, 33b) and the stationary wall portions (90 to 92), and
the adhesive (95) is housed in an adhesive housing recessed portion (94a to 94h) which is provided at at least one of the both end portions (37, 39) and the stationary wall portions (90 to 92) and which is recessed downward in the widthwise direction.

2. The optical scanning device (5) according to claim 1, wherein
the plurality of light-emitting modules (30Y to 30K) includes:
upper light-emitting modules (30Y, 30K) each of which is placed between one pair of the stationary wall portions (90 to 92) and also placed on an upper side of the up/down direction; and
lower light-emitting modules (30M, 30C) each of which is placed between one pair of the stationary wall portions (90 to 92) and also placed on a lower side of the up/down direction, and
each of the stationary wall portions (90 to 92) has:
first facing portions (90a, 91a, 92a) which face the widthwise both end portions (37) of the upper light-emitting modules (30Y, 30K), respectively; and
second facing portions (90b, 91b, 92b) which face the widthwise both end portions (39) of the lower light-emitting modules (30M, 30C), respectively,
a length between the both end portions (37) of each upper light-emitting module (30Y, 30K) is longer than a length between the both end portions (39) of each lower light-emitting module (30M, 30C), and
an interval (xy, xk) between the first facing portions (90a, 91a, 92a) in each of the stationary wall portions (90 to 92) is larger than an interval (xm, xc) between the second facing portions (90b, 91b, 92b).

3. The optical scanning device (5) according to claim 2, wherein
the adhesive housing recessed portion (94a to 94h), with its upper end opened, is so formed as to extend generally vertically from an edge portion of the opening.

4. The optical scanning device (5) according to claim 3, wherein
the edge portion of the adhesive housing recessed portion (94a to 94h) has a circular outer shape as viewed in a plan view along a vertical direction.

5. The optical scanning device (5) according to claim 4, wherein
the adhesive housing recessed portion (94a to 94h) is formed into a generally semicylindrical shape recessed downward from the edge portion.

6. The optical scanning device (5) according to claim 1, wherein
the adhesive (95) is composed of ultraviolet curable resin.

7. The optical scanning device (5) according to claim 1, wherein
the adhesive housing recessed portion (94a to 94h) is provided so as to stretch over a range including the both end portions (37, 39) as well as the stationary wall portions (90 to 92).

8. An image forming apparatus (100) comprising:
one or more image carriers (1a to 1d) each having a photoconductor layer formed on its surface;
a charger unit (2a to 2d) for electrically charging the image carrier (1a to 1d) to a specified surface potential; and
the optical scanning device (5) as defined in claim 1 by which the surface of the image carrier (1a to 1d), which has been electrically charged by the charger unit (2a to 2d), is exposed to light to form an electrostatic latent image with its charged level attenuated.
